# EUROPÄISCHE PATENTSCHRIFT

(11) **EP 3 522 726 B1**
(45) Veröffentlichungstag und Bekanntmachung des Hinweises auf die Patenterteilung: **10.12.2025**
(21) Anmeldenummer: 17787307.2
(22) Anmeldetag: 06.10.2017
(51) Int. Cl.: A21C 5/04, A21C 7/00

(54) **VERFAHREN ZUM AUSWIEGEN UND TRANSPORTIEREN VON TEIG UND TEIGTROMMEL**
METHOD FOR WEIGHING AND TRANSPORTING DOUGH AND DOUGH DRUM
PROCÉDÉ DE PESAGE ET DE TRANSPORT DE LA PÂTE ET DU TAMBOUR À PÂTE

(30) Priorität: 07.10.2016 AT 509102016
(43) Veröffentlichungstag der Anmeldung: 14.08.2019
(73) Patentinhaber: KÖNIG MASCHINEN GESELLSCHAFT M.B.H., 8045 Graz (AT)
(72) Erfinder: SAUSENG, Robert, 8061 St. Radegrund (AT); RAUCH, Eduard, 8321 St. Margarethen (AT); STELZER, Hannes, 8502 Lannach (AT)
(74) Vertreter: Wildhack & Jellinek Patentanwälte GmbH
(86) Internationale Anmeldenummer: PCT/AT2017/060258
(87) Internationale Veröffentlichungsnummer: WO 2018/064701

(56) Entgegenhaltungen:
- US-A- 3 125 039
- US-A- 3 125 039
- US-A- 5 897 203
- US-A- 5 897 203
- US-A1- 2007 248 711
- US-A1- 2007 248 711

## Beschreibung

Die Erfindung betrifft ein Verfahren zum Auswiegen und Transportieren von Teig gemäß dem Oberbegriff des Patentanspruchs 1 sowie eine Teigtrommel zum Portionieren von Teig gemäß dem Oberbegriff des Patentanspruchs 5.

Aus dem Stand der Technik sind diverse Verfahren sowie Vorrichtungen, auch Teigteilmaschinen genannt, bekannt, welche nach der Volumenmethode ein gefordertes Teiggewicht aus einer Teigmasse portionieren. Die aus dem Stand der Technik bekannten Vorrichtungen verwenden dabei üblicherweise Teigtrommeln, die eine Anzahl von Teilkolben aufweisen, in die Teig eingepresst und derart portioniert wird. Die Teilkolben, oder auch Verwiegestempel genannt, werden mittels Steuerkurvenhebelsystemen oder mechanischen Systemen gesteuert.

Aus den US 3 125 039 A (HAUG, F ET AL) vom 17. März 1964, der US 5 897 203 A (KOCK GERD [DE]) vom 27. April 1999 sowie der US 2007/248711 A1 (BRUNNER KARL HEINZ [US] ET AL) vom 25. Oktober sind Vorrichtungen und Verfahren zum Auswiegen und Transportieren von Teig bekannt. Die Vorrichtungen umfassen dabei eine Auswiegevorrichtung mit einem Auswiegeschieber, der in einem Ausgabekanal gesteuert hin- und herbewegbar ist. Weiters umfassen die Vorrichtungen eine um ihre Achse verschwenkbare oder verdrehbare Teigtrommel, die zumindest eine Aufnahmekammer zur Aufnahme von Teig und je Aufnahmekammer einen in der Aufnahmekammer in radialer Richtung der Teigtrommel linear geführten Verwiegestempel, der durch eine Verstellvorrichtung in der Aufnahmekammer verstellt wird. Die Vorrichtungen umfassen ebenfalls eine Wirktrommel mit einer Anzahl über den Umfang der Wirktrommel gleichmäßig verteilten Wirkkammern. In einem Auswiegeschritt wird ein definiertes Teigvolumen über den Ausgabekanal mittels des Auswiegeschiebers in zumindest eine Aufnahmekammer ausgewogen und/oder eingepresst, wobei das ausgewogene Teigvolumen mittels radialer Verstellung des Verwiegestempels vorgegeben und eingestellt wird. Wwobei in einem Transportschritt nach Erreichen des vorgegebenen Füllvolumens und/oder Fülldrucks in der Aufnahmekammer der Auswiegeschieber angehalten wird und die Teigtrommel in einen Übergabebereich verschwenkt wird bis die jeweilige mit Teig gefüllte Aufnahmekammer gegenüber einer der Wirkkammern positioniert ist, sodass der Teig aus der Aufnahmekammer in die jeweilige Wirkkammer übergebbar ist, und wobei der Verwiegstempel in einem Ausstoßschritt derart in der Aufnahmekammer verstellt wird, sodass der Teig aus der Aufnahmekammer ausgestoßen und an die Wirkkammer abgegeben wird wobei die Verstellvorrichtung zumindest einen Linearantrieb umfasst, der zumindest einen Verwiegestempel gleichzeitig und gleichmäßig, gesteuert verstellt , wobei der Hub der Verwiegestempel durch die Verstellvorrichtung gesteuert und je nach Beschaffenheit des Teiges oder nach Vorgabe, gegebenenfalls nach einer abgespeicherten Vorlage, verändert wird.

Der Nachteil, der aus dem Stand der Technik bekannten Systemen liegt darin, dass die zu steuernden Abläufe durch mechanische Elemente definiert und damit der Zeitablauf der Bewegung der Verwiegestempel nicht oder nur beschränkt veränderbar ist. Dies führt zu Einschränkungen des Gewichtsbereiches der auswiegbaren Teiglinge, einer Einschränkung der verwendbaren Teigsorten und damit der Produktionsleistung.

Aufgabe der vorliegenden Erfindung ist es daher ein Verfahren der eingangs erwähnten Art zu schaffen, das es ermöglicht eine große Bandbreite von Teigen und Teigvolumen zu verarbeiten.

Diese Aufgabe wird durch die kennzeichnenden Merkmale des Anspruchs 1 gelöst.

Durch die Verwendung eines Linearantriebs zur Verstellung der Verwiegestempel ist es möglich, durch Einstellung der Bewegungskinematik des Linearantriebes die Steuerzeiten sowie die Verstellgeschwindigkeiten des Verwiegestempels bzw. der Verwiegestempel zu verändern. So kann beispielsweise durch Erhöhung des Hubs des Verwiegestempels ein größeres Volumen in die Aufnahmekammern eingebracht und so das in die Teigtrommel eingewogene bzw. aus der Auswiegevorrichtung ausgewogene Teigvolumen bzw. Teiggewicht verändert werden. Weiters ermöglicht die flexible Verstellung des Linearantriebs unterschiedliche, komplexe Bewegungsmuster der Verwiegestempel vorzugeben, wodurch eine schonende Bearbeitung einer großen Bandbreite von Teigen und Teiggewichten ermöglicht wird. Durch die Teilleiste können mehrere oder alle Verwiegestempel gleichzeitig verstellt werden, wodurch ein einheitliches Verstellprofil der Verwiegestempel erzeugt werden kann. Weiters ist durch die Teilleiste möglich, die Anzahl sowie die Teilung bzw. die Dimension der Verwiegestempel zu variieren, ohne die Verstellvorrichtung bzw. Teile der Verstellvorrichtung austauschen zu müssen. Der Linearantrieb umfasst einen elektromechanischen Antrieb und zumindest einen Aktor, mit dem eine Anzahl der Verwiegestempel über die Teilleiste verstellbar ist, wobei mittels des Aktors die rotatorische Bewegung des elektromechanischen Antriebs in eine Linearbewegung umwandelbar ist.

Das erfindungsgemäße Verfahren kann weiters verbessert werden, indem im Transportschritt während dem Verschwenken der Teigtrommel in den Übergabebereich der Verwiegestempel gesteuert eingezogen wird und das Volumen in der Aufnahmekammer vergrößert wird, um die Teigbelastung oder den Teigdruck zu reduzieren.

Durch die Entlastung des Teiges nach dem Auswiegeschritt bzw. im Transportschritt wird ermöglicht, dass der Teig, insbesondere bei starken expansiven Teigen, nicht aus der Aufnahmekammer ausquillt und sein ursprüngliches inneres Druckniveau annehmen kann. Gerade bei Teigen mit geringer Dichte, z.B. mit großen Poren oder einem stärkeren Expansionsverhalten, verhindert die Druckentlastung ein starkes Anhaften des Teiges an den Verwiegestempeln und ermöglicht weiters eine schonende Verarbeitung des Teiges.

Die Teigbeschaffenheit kann weiter vorteilhaft beeinflusst werden, indem im Auswiegeschritt abhängig von der Teigkonsistenz und/oder der Teigfestigkeit die Verwiegestempel vor dem Auswiegen des Teiges in die Aufnahmekammern eingefahren werden, oder indem der Teig mittels des Auswiegschiebers gegen die Verwiegestempel gepresst wird und die Verwiegestempel dann mit dem Auswiegeschieber gleichzeitig verstellt werden.

Durch das Einfahren der Verwiegestempel vor dem Füllprozess wird die Struktur vor allem von weichen und empfindlichen Teigen geschont, was in weiterer Folge eine optimale Teigqualität ergibt. Bei festeren Teige, wie z.B. Laugengebäck oder Teige, welche Druck erfordern, wird es ermöglicht, dass zuerst der Auswiegeschieber den Teig gegen den Verwiegestempel drückt und somit einen vorgegebenen Druck erzeugt bzw. den Teig einpresst und dann der Verwiegestempel synchron mit der Schiebebewegung verstellt wird, sodass auf den Teig ein ständig gleichbleibender Druck erzeugt wird. Dies ermöglicht wiederum die gewünschte Qualität des Teiges zu halten und garantiert eine hohe Gewichtsgenauigkeit der derart ausgewogenen Teigstücke.

Um den Teig aus der Aufnahmekammer vorteilhaft je nach Dimension der Verwiegestempel auszustoßen, kann vorgesehen sein, dass der Ausstoßschritt bereits während des Transportschrittes beginnt, wobei der Zeitpunkt des Beginns und/oder die Dauer des Ausstoßschrittes abhängig von der Dimension der Verwiegstempel eingestellt wird, wobei bei Vierwiegestempeln mit großen Durchmessern der Ausstoßschritt später, insbesondere nach einem größeren Verschwenkwinkel der Teigtrommel, begonnen wird und mit einer hohen Verstellgeschwindigkeit der Verwiegestempel erfolgt und/oder wobei bei Verwiegstempeln mit kleinen Durchmessern der Ausstoßschritt früher, insbesondere bei einem kleineren Verschwenkwinkel der Teigtrommel, begonnen und mit einer geringeren Verstellgeschwindigkeit der Verwiegestempel erfolgt.

Weiters ist es Aufgabe der vorliegenden Erfindung, eine Teigtrommel der eingangs genannten Art zu schaffen, mit der eine große Bandbreite unterschiedlicher Teige portioniert bzw. verarbeitet werden kann und die dabei einen geringen Rüstaufwand erfordert.

Diese Aufgabe wird durch die kennzeichnenden Merkmale des Anspruchs 5 gelöst.

Durch den Einbau eines Linearantriebs in der Teigtrommel ist es möglich, die Steuerzeiten bzw. den Hub der Verwiegestempel zu variieren und je nach Arbeitsschritt, in dem sich die Teigtrommel gerade befindet, an die Erfordernisse des Teigs anzupassen. Weiters ist es möglich, durch die einstellbare Steuerkinematik des Linearantriebes unterschiedliche Portionierungsverfahren und Verarbeitungsschritte zu realisieren und damit eine große Bandbreite von Teigen zu verarbeiten, ohne die Maschine umrüsten zu müssen. Weiters kann der Druck in der Aufnahmekammer je nach Anforderung des Teiges durch eine entsprechende Verstellung der Verwiegestempel durch den Linearantrieb angepasst werden. Der Linearantrieb umfasst einen elektromechanischen Antrieb und zumindest einen Aktor, mit dem eine Anzahl der Verwiegestempel über die Teilleiste verstellbar ist, wobei mittels des Aktors die rotatorische Bewegung des elektromechanischen Antriebs in eine Linearbewegung umwandelbar ist.

Besonders vorteilhafte Ausführungsformen der Vorrichtung werden durch die Merkmale der abhängigen Ansprüche näher definiert:
Eine vorteilhafte Ausführungsform sieht vor, dass der elektromechanische Antrieb eine Positionserkennung umfasst.

Dabei ist vorteilhaft vorgesehen, dass der Aktor als Spindeltrieb, Hub-Kurbel, Kniehebel, Hydraulikzylinder oder Pneumatikzylinder ausgebildet ist.

Um eine Vielzahl unterschiedlicher Verwiegestempel verwenden zu können, ist vorgesehen, dass die Teigtrommel zumindest eine Wechselleiste umfasst, die in das Gehäuse lösbar einschiebbar oder aufsteckbar ist, wobei die Aufnahmekammern für die zu portionierenden Teigportionen in der Wechselleiste angeordnet sind.

In einer Vorteilhaften Ausführungsform ist vorgesehen, dass die Verstellvorrichtung je einen Linearantrieb je Verwiegstempel umfasst, wobei jeder Verwiegestempel, insbesondere alle Verwiegestempel gleichzeitig und/oder gleichmäßig, durch die jeweiligen Linearantrieb gesteuert in den jeweiligen Aufnahmekammern verstellbar sind, wobei der Hub und/oder die Verstellgeschwindigkeit und/oder der Verstellzeitpunkt der Verwiegestempel durch den jeweiligen Linerantrieb gesteuert verstellbar ist.

Durch die Verwendung einer Wechselleiste ist es möglich, die in die Wechselleiste bzw. die Aufnahmekammern der Wechselleiste eingesetzten Verwiegestempel einfach auszutauschen, indem die Wechselleiste aus dem Gehäuse ausgebracht und eine andere Wechselleiste, beispielsweise mit anderer Stempelteilung oder anderen Stempelgrößen, wieder eingesetzt wird.

Eine vorteilhafte Anwendung der erfindungsgemäßen Vorrichtung sieht vor, dass eine Vorrichtung eine Auswiegevorrichtung mit einem Auswiegeschieber umfasst, der in einem Ausgabekanal gesteuert hin und her bewegbar ist, und eine verschwenkbare oder um ihre Achse verdrehbare erfindungsgemäße Teigtrommel umfasst.

Weitere Vorteile und Ausgestaltungen der Erfindung ergeben sich aus der Beschreibung in den beiliegenden Zeichnungen.

Die Erfindung ist im Folgenden anhand von besonders vorteilhaften, aber nicht einschränkend zu verstehenden, Ausführungsbeispielen in den Zeichnungen schematisch dargestellt und wird unter Bezugnahme auf die Zeichnungen beispielhaft beschrieben:
Fig. 1 zeigt eine Schnittansicht einer erfindungsgemäßen Teigtrommel.
Fig. 2 zeigt eine erfindungsgemäße Vorrichtung mit Auswiegevorrichtung, Teigtrommel und Wirktrommel im Schnitt.
Fig. 3 bis 8 zeigt eine bevorzugte Ausführungsform des erfindungsgemäßen Verfahrens.

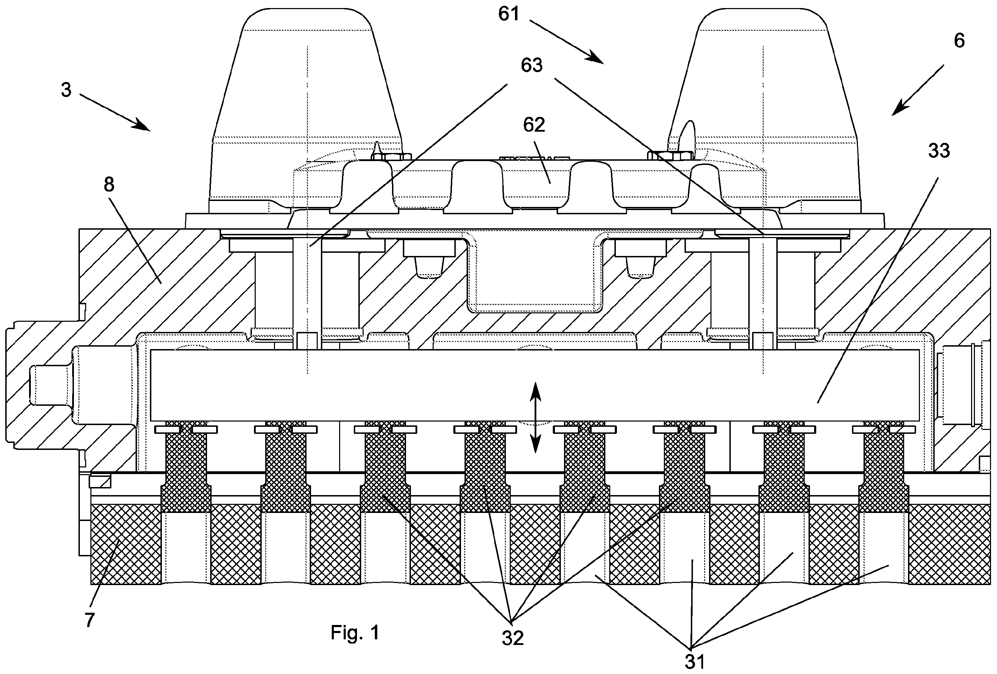

In Fig. 1 ist eine erfindungsgemäße Teigtrommel 3 zum Portionieren von Teig in einer Schnittansicht dargestellt, der Schnitt ist dabei entlang der Breite der Teigtrommel 3 geführt. Die Teigtrommel 3 umfasst ein Gehäuse 8, das in Form einer Trommel ausgebildet ist. Die Teigtrommel 3 weist weiters acht Aufnahmekammern 31 auf, die sich in radialer Richtung der Teigtrommel 3 erstrecken. In jeder Aufnahmekammer 31 ist jeweils ein Verwiegestempel 32 angeordnet, der in den Aufnahmekammern 31 linear geführt ist. Die Verwiegestempel 32 sind linear in den Aufnahmekammern 31 in radialer Richtung der Teigtrommel 3 verstellbar. Wie in Fig. 1 dargestellt, geben die Verwiegestempel 32 bei Verstellung der Verstellvorrichtung 6 in Richtung des Inneren der Teigtrommel 3 einen Raum in den Aufnahmekammern 31 frei, in den Teig eingebracht werden kann. Die Verwiegestempel 32 liegen dabei auf einer Verstellvorrichtung 6 auf, mit der die Verwiegestempel 32 in radialer Richtung der Teigtrommel 3 verstellbar sind. Die Verstellvorrichtung 6 weist einen Linearantrieb 61 auf, mit dem die Verwiegestempel 32, bei dieser Ausführungsform alle Verwiegestempel 32, verstellt werden. Mittels des Linearantriebs 61 können die Verwiegestempel 32 gleichzeitig und gleichmäßig gesteuert in den jeweiligen Aufnahmekammern 31 verstellt werden. Der Hub der Verwiegestempel 32 und/oder die Verstellgeschwindigkeit und/oder der Verstellzeitpunkt der Verwiegestempel 32 sind dabei durch den Linearantrieb 61 gesteuert verstellbar und können entsprechend der benötigten Prozessparameter eingestellt werden. Wie in Fig. 1 dargestellt, kann die Verstellvorrichtung 6 optional eine Teilleiste 33 umfassen, die mittels des Linearantriebs 61 verstellbar ist. Die Teilleiste 33 ist prismatisch ausgebildet und die Verwiegestempel 32 liegen an der Teilleiste 33 berührend an, wodurch die Verstellung der Teilleiste 33 mittels des Linearantriebs 61 bzw. der Verstellvorrichtung 6 zu einer Verstellung der Verwiegestempel 32 in den Aufnahmekammern 31 führt.

Die Verwiegestempel 32 können an der Teilleiste 33 anliegen bzw. an diese angelegt oder mit dieser verbunden werden. Beispielsweise können die Verwiegestempel 32 an der Teilleiste 33 anliegen, wenn Teig in die Aufnahmekammern 31 eingepresst wird.

Der Linearantrieb 61 weist bei dieser Ausführungsform einen elektromechanischen Antrieb 62, der eine Positionserkennung aufweist, auf. Der Linearantrieb 61 weist weiters zwei Aktoren 63 auf, die als Spindeltrieb ausgebildet sind. Der elektromechanische Antrieb 62, der beispielsweise ein Elektromotor ist, treibt jeweils eine Mutter der Spindeltriebe bzw. der Aktoren 63 an, wodurch jeweils die Spindel der Spindeltriebe linear verstellt wird. Die Spindeln der Spindeltriebe bzw. der Aktoren 63 sind mit der Teilleiste 33 verbunden, wodurch die Verstellung der Spindeln der Aktoren 63 zu einer linearen Verstellung der Teilleiste 33 entlang der in Fig. 1 durch den Doppelpfeil dargestellten Verstellrichtungen führt. Durch die Aktoren 63, wie z.B. bei der in Fig. 1 dargestellten Ausführungsform die Spindeltriebe, wird die rotatorische Bewegung des elektromechanischen Antriebs 62 in eine translatorische bzw. lineare Bewegung umgewandelt.

Wie in Fig. 1 dargestellt, kann die Teigtrommel 3 optional eine Wechselleiste 7 umfassen, die in das Gehäuse 8 lösbar, einschiebbar oder einsteckbar ist. Die Wechselleiste 7 weist dabei eine Anzahl von Aufnahmekammern 31 auf, die insbesondere fluchtend hintereinander in der Wechselleiste 7 angeordnet sind. Durch die Verwendung bzw. Vorsehung einer Wechselleiste 7 kann ein einfacher Austausch der Verwiegestempel 32, die in den Aufnahmekammern 31 angeordnet sind, vollzogen werden, indem entsprechende Wechselleisten 7 mit jeweils unterschiedlichen Dimensionen der Verwiegestempel 32 bzw. unterschiedlich großen Aufnahmekammern 31 in das Gehäuse 8 eingesetzt werden. Optional kann die Verstellung der Verwiegestempel 32 auch durch aus dem Stand der Technik bekannte andere Linearantriebe, wie z.B. Linearmotoren, Hydraulik oder Pneumatikzylinder, erfolgen bzw. die Verstellvorrichtung 6 derartige Linearantriebe umfassen. Ebenso kann alternativ vorgesehen sein, dass die Verstellvorrichtung 6 rotative Antriebe welche eine Drehbewegungen in eine Lineare Verstellbewegung umwandeln, wie z.B. Kurbel- oder Kniehebelsysteme, Zahnstangen und dgl., umfasst.

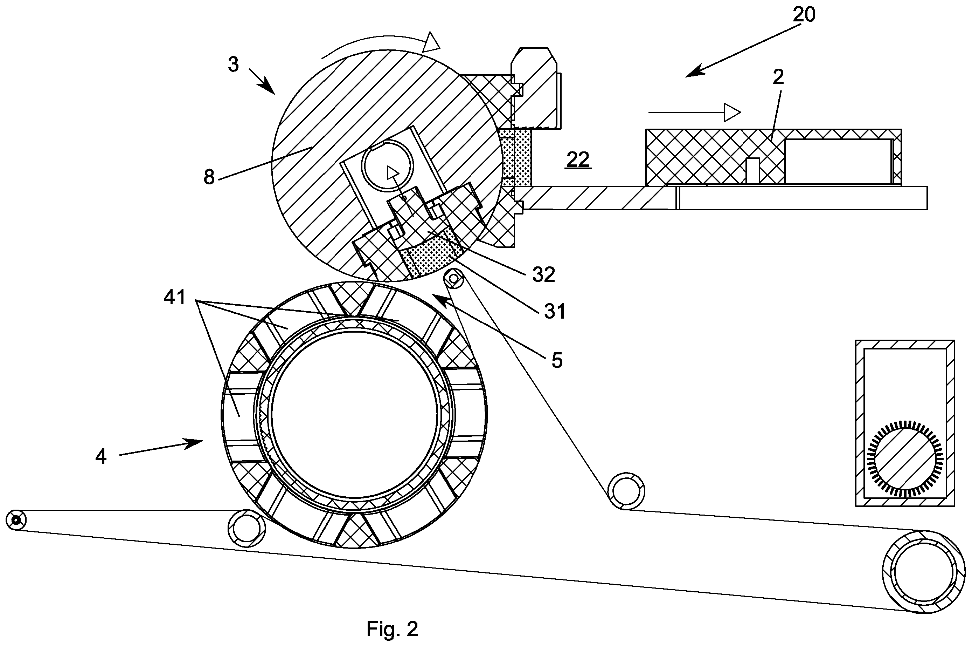

Fig. 2 zeigt eine erfindungsgemäße Teigtrommel 3 in einer Vorrichtung zum Portionieren und Bearbeiten von Teig im Schnitt. Die Vorrichtung weist eine Auswiegevorrichtung 20 auf, die einen Auswiegeschieber 2 umfasst, der in einem Ausgabekanal 31 linear hin und her bewegbar ist. Weiters ist eine Wirktrommel 4 vorgesehen, die eine Anzahl von Wirkkammern 41 aufweist, die gleichmäßig über dem Umfang der Wirktrommel 4 verteilt angeordnet sind. Die Teigtrommel 3 ist derart zur Wirktrommel 4 positioniert, dass Teig, der in den Aufnahmekammern 31 der Teigtrommel 3 eingebracht ist, in einem Übergabebereich 5 aus der Aufnahmekammer 31 der Teigtrommel 3 in die Wirkkammern 41 der Wirktrommel 4 übergeben werden kann. Die Teigtrommel 3 und die Wirktrommel 4 sind jeweils in ihrer Achse verdrehbar bzw. verschwenkbar, sodass die Aufnahmekammern 31 gegenüber der Wirkkammer 41 positioniert werden können.

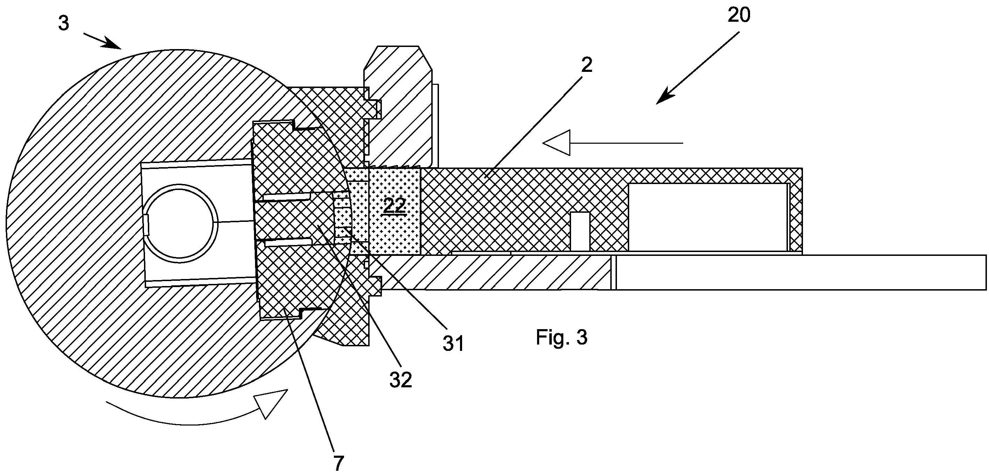

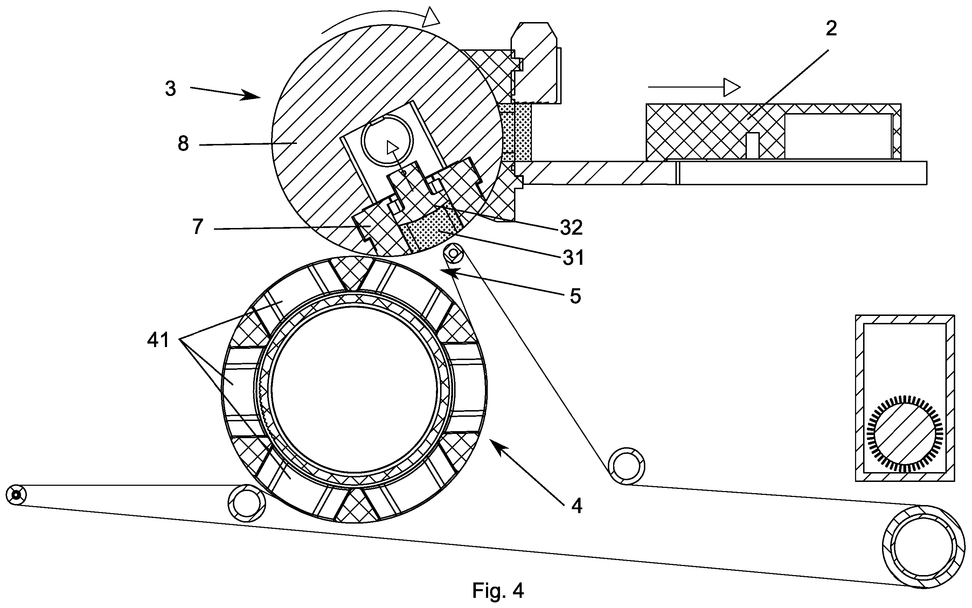

Im Folgenden ist ein erfindungsgemäßes Verfahren anhand eines bevorzugten Ausführungsbeispiels beschrieben:
Wie in Fig. 3 dargestellt, wird mittels des Auswiegeschiebers 2 Teig in einem Auswiegeschritt über den Ausgabekanal 22 aus der Auswiegevorrichtung 20 ausgebracht. Die Teigtrommel 3 wird im Auswiegeschritt derart zur Auswiegevorrichtung 20 positioniert, dass die Aufnahmekammer 31 in Richtung des Ausgabekanals 22 der Auswiegevorrichtung 20 weist. Durch die Verstellvorrichtung 6 bzw. den Linearantrieb 61 wird der Verwiegestempel 32 in der Aufnahmekammer 31 bewegt, sodass ein Raum für den Teig freigegeben wird. Der Auswiegeschieber 2 drückt den im Ausgabekanal 22 befindlichen Teig sodann in den durch den Verwiegestempel 32 in der Aufnahmekammer 31 freigegebenen Raum ein, wodurch ein durch die Position des Verwiegestempels 32 definierter Volumenteil des Teiges in die Aufnahmekammer 31 eingebracht wird. Durch die radiale Verstellung des Verwiegestempels 32 mittels des Linearantriebs 61 bzw. des Verstellmechanismus 6 wird derart eine definierte Teigmenge aus dem Ausgabekanal 22 der Auswiegevorrichtung 20 ausgewogen. Nach Erreichen des vorgegebenen Füllvolumens oder Fülldrucks des Teiges in der Aufnahmekammer 31 wird der Auswiegeschieber 2 angehalten und die Teigtrommel 3 in einem Transportschritt (Fig. 4), bei dieser Ausführungsform im Uhrzeigersinn, verschwenkt bzw. verdreht. Im Transportschritt wird die Teigtrommel 3 mit der Aufnahmekammer 31 bzw. den Aufnahmekammern 31 in den Übergabebereich 5 verschwenkt und die jeweilige mit Teig gefüllte Aufnahmekammer 31 derart zu einer der Wirkkammern 41 der Wirktrommel 4 positioniert, sodass der Teig aus der Aufnahmekammer 31 in die jeweilige Wirkkammer 41 übergeben werden kann. Beim Erreichen des Übergabebereichs 5 durch die Aufnahmekammer 31 wird der Verwiegestempel 32 durch den Linearantrieb 61 bzw. die Verstellvorrichtung 6 in einem Ausstoßschritt in der Aufnahmekammer 31 in radialer Richtung verstellt, sodass der Teig aus der Aufnahmekammer 31 ausgepresst bzw. ausgedrückt wird. Beim Ausstoßen des Teiges aus der Aufnahmekammer 31 wird die gegenüber der Aufnahmekammer 31 positionierte Wirkkammer 41 mit der Teigmenge, die sich in der Aufnahmekammer 31 befindet, gefüllt. Durch den Linearantrieb 61, der die Verwiegestempel 32, bei dieser Ausführungsform alle Verwiegestempel 32, gleichzeitig und gleichmäßig verstellt, ist es möglich, den Hub und/oder die Verstellgeschwindigkeit und/oder den Verstellzeitpunkt der Verwiegestempel 32 gesteuert, je nach Beschaffenheit des Teiges bzw. nach einer in der Steuerung der Lineareinheit 61 abgespeicherten Vorlage, zu verändern. So kann beispielsweise durch Veränderung des Hubes der Verwiegestempel 32 mittels des Linearantriebs 61 das durch den Auswiegeschieber 2 in die Aufnahmekammer 31 ausgewogene Teigvolumen verändert und derart vorgegeben werden.

Optional kann bei dem erfindungsgemäßen Verfahren der Verwiegestempel 32 bzw. alle Verwiegestempel 32 beim Transportschritt während dem Verschwenken der Teigtrommel 3 in den Übergabebereich eingezogen werden, also in Richtung des Zentrums der Teigtrommel 3 verstellt werden, womit das Volumen in der Aufnahmekammer 31 vergrößert wird und damit die Teigbelastung bzw. der auf den Teig in der Aufnahmekammer 31 wirkende Druck reduziert werden kann. Durch die Rückzugsbewegung des Verwiegestempels 32 wird dem Teig mehr Raum gegeben und beispielsweise expansive Teige, die nach dem Auswiegevorgang aus der Auswiegevorrichtung 20 zum Expandieren neigen, können weiterhin in der Aufnahmekammer 31 gehalten, ohne dass diese vollständig oder teilweise aus dieser Herausquellen bzw. herausstehen. Dies bewirkt eine optimale Druckverteilung im ausgewogenen Teig und beeinflusst derart die Qualität des Teiges positiv.

Weiters kann im Auswiegeschritt abhängig von der Teigkonsistenz und/oder der Teigfestigkeit die Position der Verwiegestempel 32 verändert werden. So kann beispielsweise vorgesehen sein, dass der Verwiegestempel 32 bereits vor dem Auswiegeschritt bzw. dem Auswiegehub des Auswiegeschiebers 2 in Richtung des Zentrums der Teigtrommel 3 verstellt wurde und somit das auszuwiegende Volumen vor dem Füllvorgang bzw. Auswiegeschritt in der Aufnahmekammer 31 freigegeben wird. Dies bewirkt beispielsweise eine optimale Qualität von Teigen, die derart nur einen geringen Auswiegedruck ausgesetzt sind. Alternativ kann vorgesehen sein, dass im Auswiegeschritt der Verwiegestempel 32 erst vollständig bzw. teilweise ausgefahren ist, also zu Beginn des Auswiegeschritts keinen Raum in der Aufnahmekammer 31 freigibt. Wird sodann der Auswiegeschieber 2 im Ausgabekanal 22 in Richtung der Aufnahmekammer 31 verstellt und damit der Teig belastet, bewirkt dies auf dem Teig einen Gegendruck, wodurch ein konstanter Druck auf den Teig erzeugt werden kann. Erst nach Erreichen eines vorgegebenen Teigdruckes wird sodann der Verwiegestempel 32 entsprechend dem voreingestellten Auswiegevolumen bzw. Auswiegedruck durch die Verstellvorrichtung 6 bzw. Linearantrieb 61 in Richtung des Zentrums der Teigtrommel 3 verstellt und so nach und nach der Raum in der Aufnahmekammer 31 für den Teig freigegeben und dieser mittels des Auswiegeschiebers 2 in die Aufnahmekammer 31 eingepresst. Durch diesen optionalen Schritt ist es möglich, den Teig ständig unter einem konstanten Druck zu halten, was beispielsweise bei festen Teigen z.B. bei Laugengebäck zu einer besseren Qualität führt und eine gute Gewichtsgenauigkeit der ausgewogenen Teigteile bewirkt.

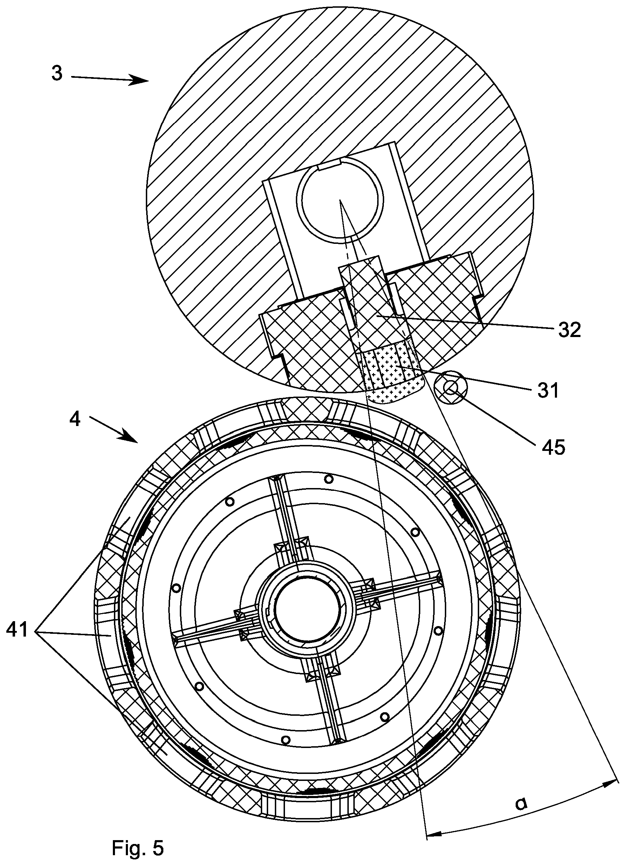

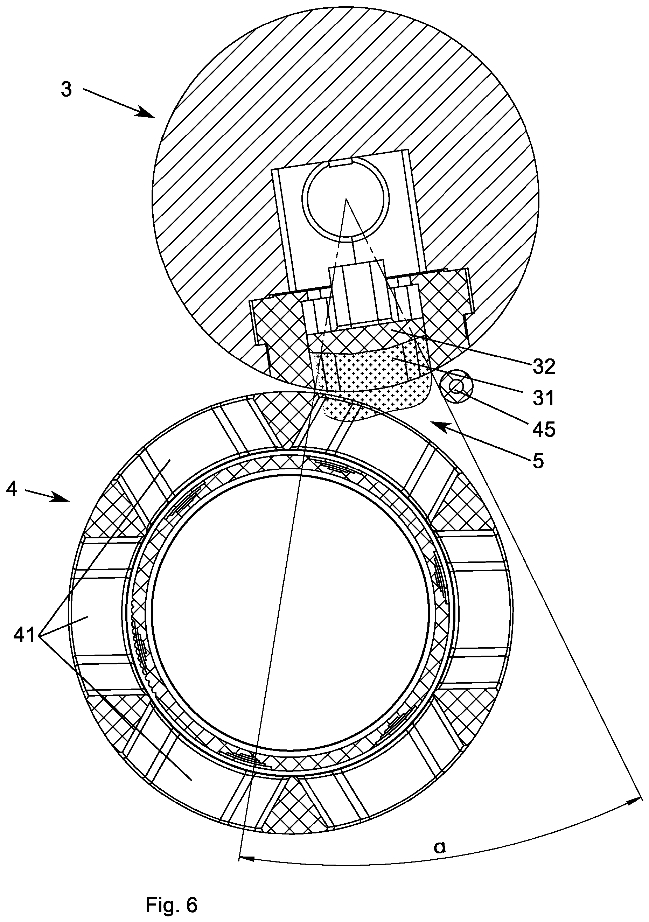

Weiters kann bei dem erfindungsgemäßen Verfahren vorgesehen sein, dass der Ausstoßschritt bereits während des Transportschrittes beginnt. Wie in den Fig. 5 und 6 dargestellt, kann dabei je nach Dimension des Verwiegestempels 32 bei unterschiedlichen Verstellwinkeln α Druck auf den Teig erzeugt werden und der Ausstoßvorgang begonnen werden. So kann beispielsweise bei kleinen Verwiegestempeln (Fig. 5) der Ausstoßvorgang bereits bei geringen Verstellwinkeln bzw. Verschwenkwinkeln α der Teigtrommel 3 beginnen, da der Querschnitt der Aufnahmekammern 31 bzw. der Verwiegestempel 32 etwaige Hindernisse wie z.B. Umlenkrollen 45 bereits passiert haben. So kann bei Verwiegestempeln 32 mit kleinen Durchmessern der Ausstoßschritt bereits früher beginnen als bei Verwiegestempeln 32 mit großen Durchmessern (Fig. 6).

Ebenso kann abhängig von der Dimension der Verwiegestempel 32 bzw. der ausgewogenen Teigmenge das Ende des Ausstoßschrittes abhängig von der geforderten Verstellgeschwindigkeit der Verwiegestempel 32 bzw. die Beschaffenheit der Teige verändert werden. Durch die flexible Einstellung der Ausstoßgeschwindigkeit bzw. Ausstoßzeitpunkte kann eine Vielzahl von unterschiedlichen Verwiegestempeln 32 mit der selben Verstellvorrichtung bzw. Teilleiste 33 bedient werden, wodurch die Variabilität der Teigtrommel 3 bzw. des erfindungsgemäßen Verfahrens erhöht wird. So kann beispielsweise mit ein und derselben Teigtrommel 3 je nach Bedarf der einzelnen Produktionszeiten die Ausstoßgeschwindigkeit im Ausstoßschritt verändert werden, um eine optimale Ausbringung des Teiges aus den Aufnahmekammern 31 in die Wirkkammern 41 zu erreichen. Weiters ist die Verstellung der einzelnen Prozessparameter nicht an mechanische Elemente gekoppelt und kann so mit ein und derselben Verstellvorrichtung 6 bzw. dem Linearantrieb 61 je nach Bedarf eingestellt werden.

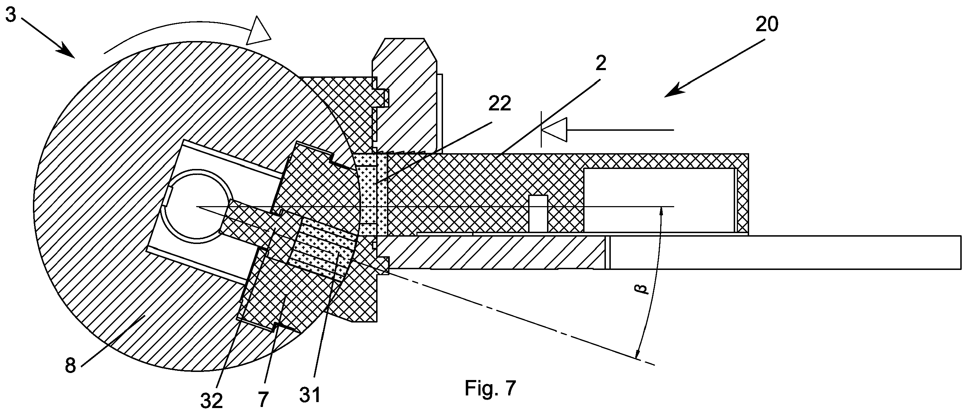

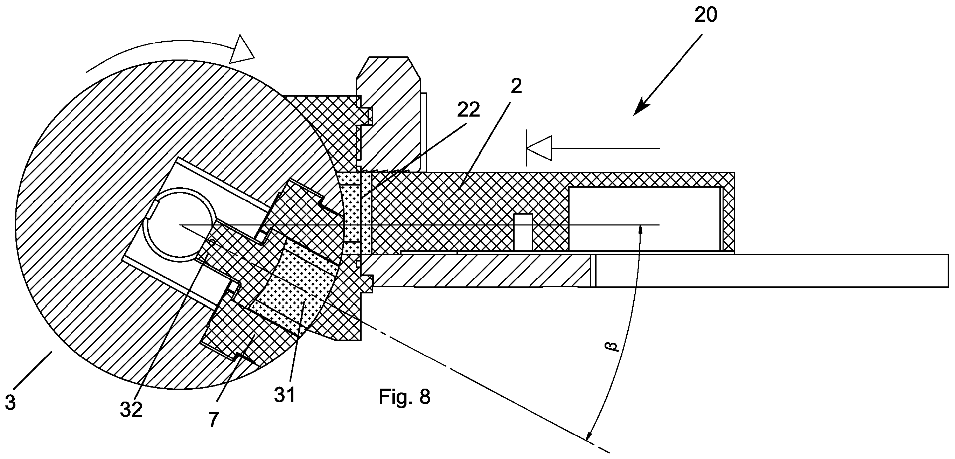

Wie in den Fig. 7 und 8 dargestellt, kann auch vorteilhaft die Rückzugsbewegung der Verwiegestempel 32 während des Transportvorgangs an den Durchmesser der Verwiegestempel 32 angepasst werden. So kann beispielsweise, wie in Fig. 7 dargestellt, bei kleineren Verwiegestempeln 32 der Rückzugsvorgang bereits früher beginnen, da die Aufnahmekammer 31 nicht mehr mit dem Ausgabekanal 22 der Auswiegevorrichtung 20 bei geringeren Verdrehwinkeln β nicht mehr korrespondiert. Bei größeren Verwiegestempeln 32, wie in Fig. 8 dargestellt, kann der Zeitpunkt der Rückzugsbewegung des Verwiegestempels 32 im Verhältnis zu kleinen Verwiegestempeln 32 anders gewählt werden, sodass auch bei Variation der Stempeldurchmesser gewährleistet werden kann, dass bei der Rückzugsbewegung kein Teig von dem Verwiegestempel 32 in die Aufnahmekammer 31 eingezogen wird.

So kann durch die erfindungsgemäße Teigtrommel 3 je nach Beschaffenheit des Teiges, ob dieser ein hohes spezifisches oder ein geringes spezifisches Gewicht, ein hohes Quellverhalten, ein fester oder lockerer Teig ist, die Prozessparameter in jedem einzelnen Schritt des Auswiegeverfahrens an die Erfordernisse des Teiges angepasst werden und derart eine höchste Qualität während dem gesamten Auswiege- und Bearbeitungsprozess des Teiges gewährleistet werden.

Alternativ kann vorgesehen sein, dass die Teigtrommel 3 auch mehrere über den Umfang verteilte Wechselleisten 7 aufweist und derart während einer Drehung der Teigtrommel 3 um die eigene Achse mehrere jeweils entlang der Wechselleiste 7 hintereinander angeordnete Aufnahmekammern 31 in Korrespondenz mit der Auswiegevorrichtung 20 bzw. den Wirkkammern 41 der Wirktrommel 4 gebracht werden können. Ebenfalls kann vorgesehen sein, dass, wie in den Figuren 1 bis 8 dargestellt, die Teigtrommel 3 als sogenannte Teigteiltrommel ausgebildet ist, wobei diese jeweils nur eine Wechselleiste 7 umfasst, die in das Gehäuse 8 der Teigtrommel 3 einschiebbar oder aufsteckbar ist. Eine derartige Wechselleiste 7 kann dabei eine oder mehrere bzw. eine Anzahl von Aufnahmekammern 31 aufweisen, die vorteilhaft fluchtend hintereinander entlang der Längserstreckung der Wechselleiste 7 angeordnet sind. Die Aufnahmekammern 31 der jeweiligen Wechselleite 7 können dabei gleich groß ausgebildet sein und jeweils gleichartige Verwiegestempel 32 in jeder Aufnahmekammer 31 angeordnet sein.

Bei nicht dargestellten alternativen Ausführungsformen ist vorgesehen, dass die Verstellvorrichtung 6 für jeden Verwiegestempel 32 jeweils einen Linearantrieb 61 umfasst. Die Linearantriebe 61 verstellen dabei jeweils einen der Verwiegestempel 32 und können über eine Steuereinheit synchronisiert verstellt werden. Alternativ kann weiters vorgesehen sein, dass die Verwiegestempel 32 jeweils zueinander unterschiedliche Dimensionen aufweisen und für jede Dimension der Verwiegestempel 32 je ein Linearantrieb 61 vorgesehen ist, wodurch die einzelnen Verstellbewegungen der Verwiegestempel 32 bzw. der unterschiedlichen Dimensionen der Verweichstempel 32 unterschiedlich gesteuert verstellt werden können.

## Patentansprüche

1. Verfahren zum Auswiegen und Transportieren von Teig, mit einer Vorrichtung (10) umfassend:
- eine Auswiegevorrichtung (20) mit einem Auswiegeschieber (2), der in einem Ausgabekanal (22) gesteuert hin und herbewegbar ist,
- eine um ihre Achse verschwenkbare oder verdrehbare Teigtrommel (3), die zumindest eine Aufnahmekammer (31) zur Aufnahme von Teig und je Aufnahmekammer (31) einen in der Aufnahmekammer (21) in radialer Richtung der Teigtrommel (3) linear geführten Verwiegestempel (32), der durch eine Verstellvorrichtung (6) in der Aufnahmekammer (31) verstellt wird, aufweist, und
- eine Wirktrommel (4) mit einer Anzahl über den Umfang der Wirktrommel (4) gleichmäßig verteilten Wirkkammern (41),
- wobei in einem Auswiegeschritt a) ein definiertes Teigvolumen über den Ausgabekanal (21) mittels des Auswiegeschiebers (2) in zumindest eine Aufnahmekammer (31) ausgewogen und/oder eingepresst wird, wobei das ausgewogene Teigvolumen mittels radialer Verstellung des Verwiegestempels (32) vorgebeben und eingestellt wird,
- wobei in einem Transportschritt b) nach Erreichen des vorgegebenen Füllvolumens und/oder Fülldrucks in der Aufnahmekammer (31) der Auswiegeschieber (2) angehalten wird und die Teigtrommel (3) in einen Übergabebereich (5) verschwenkt wird bis die jeweilige mit Teig gefüllte Aufnahmekammer (31) gegenüber einer der Wirkkammern (41) positioniert ist, sodass der Teig aus der Aufnahmekammer (31) in die jeweilige Wirkkammer (41) übergebbar ist, und
- wobei der Verwiegstempel (32) in einem Ausstoßschritt c) derart in der Aufnahmekammer (31) verstellt wird, sodass der Teig aus der Aufnahmekammer (41) ausgestoßen und an die Wirkkammer (41) abgegeben wird,
wobei die Verstellvorrichtung (6) zumindest einen Linearantrieb (61) umfasst, der zumindest einen Verwiegestempel (32), insbesondere alle Verwiegestempel (32) gleichzeitig und gleichmäßig, gesteuert verstellt, wobei der Hub und/oder die Verstellgeschwindigkeit und/oder der Verstellzeitpunkt der Verwiegestempel (32) durch die Verstellvorrichtung (6) gesteuert und je nach Beschaffenheit des Teiges oder nach Vorgabe, gegebenenfalls nach einer abgespeicherten Vorlage, verändert wird.
wobei die Verstellvorrichtung (6) zumindest eine Teilleiste (33) umfasst, die in der Teigtrommel (3) durch den Linearantrieb (61) verstellbar angeordnet ist,
- wobei die Teilleiste (33) derart ausgebildet ist, dass die Verwiegestempel (32) an die Teilleiste (33), insbesondere berührend, anlegbar oder durch diese kraftübertragend beaufschlagbar sind, sodass bei Verstellung der Teilleiste (33) die Verwiegestempel (32) in den Aufnahmekammern (31) definiert verstellt werden,
und dass der Linearantrieb (61) einen elektromechanischen Antrieb (62) und zumindest einen Aktor (63) umfasst, mit dem eine Anzahl der Verwiegestempel (32) über die Teilleiste (33) verstellbar ist, wobei mittels des Aktors (63) die rotatorische Bewegung des elektromechanischen Antriebs (62) in eine Linearbewegung umwandelbar ist.

2. Verfahren nach Anspruch 1, **dadurch gekennzeichnet, dass** im Transportschritt b) während dem Verschwenken der Teigtrommel (3) in den Übergabebereich (5) der Verwiegestempel (32) gesteuert eingezogen wird und das Volumen in der Aufnahmekammer (31) vergrößert wird, um die Teigbelastung und/oder den Teigdruck zu reduzieren.

3. Verfahren nach einem der vorangehenden Ansprüche, **dadurch gekennzeichnet, dass** im Auswiegeschritt a) abhängig von der Teigkonsistenz und/oder der Teigfestigkeit die Verwiegestempel (32) vor dem Auswiegen des Teiges in die Aufnahmekammern (31) eingefahren werden oder dass der Teig mittels des Auswiegschiebers (2) gegen die Verwiegestempel (32) gepresst wird und die Verwiegestempel (32) dann mit dem Auswiegeschieber (2) gleichzeitig verstellt werden.

4. Verfahren nach einem der vorangehenden Ansprüche, **dadurch gekennzeichnet, dass** der Ausstoßschritt c) bereits während des Transportschrittes b) beginnt, wobei der Zeitpunkt des Beginns und/oder die Dauer des Ausstoßschritts c) abhängig von der Dimension der Verwiegstempel (32) eingestellt wird,
- wobei bei Vierwiegestempeln (32) mit großen Durchmessern der Ausstoßschritt c) später, insbesondere nach einem größeren Verschwenkwinkel der Teigtrommel (3), begonnen wird und mit einer hohen Verstellgeschwindigkeit der Verwiegestempel (32) erfolgt und/oder
- wobei bei Verwiegstempeln (32) mit kleinen Durchmessern der Ausstoßschritt c) früher, insbesondere bei einem kleineren Verschwenkwinkel der Teigtrommel (3), begonnen und mit einer geringeren Verstellgeschwindigkeit der Verwiegestempel (32) erfolgt.

5. Teigtrommel (3), insbesondere Teigteiltrommel, zum Portionieren von Teig, insbesondere zur Durchführung des Verfahrens nach einem der Ansprüche 1 bis 4, die durch einen Antrieb schrittweise drehbar oder verschwenkbar ist, umfassend ein Gehäuse (8),
- wobei die Teigtrommel (3) eine Anzahl von Aufnahmekammern (31) für die zu portionierenden Teigportionen umfasst, die insbesondere gleichmäßig über den Umfang verteilt sind,
- wobei in zumindest einer der Aufnahmekammern (31), insbesondere in jeder der Aufnahmekammern (31), ein Verwiegestempel (32) linear geführt und durch eine Verstellvorrichtung (6) in der Aufnahmekammer (31) in radialer Richtung der Teigtrommel (3) verschiebbar angeordnet ist, und
- wobei die Verwiegestempel (32) derart in der Teigtrommel (3) angeordnet sind, dass bei Verschiebung der Verwiegestempel (32) Teig in die Aufnahmekammer (41) einbringbar ist, wobei die Verstellvorrichtung (6) zumindest einen Linearantrieb (61) umfasst, mit dem eine vorgegebene Anzahl der Verwiegestempel (32), insbesondere alle Verwiegestempel (32) gleichzeitig und/oder gleichmäßig, gesteuert in den jeweiligen Aufnahmekammern (31) verstellbar sind, wobei der Hub und/oder die Verstellgeschwindigkeit und/oder der Verstellzeitpunkt der Verwiegestempel (32) durch den Linerantrieb (61) gesteuert verstellbar ist,
wobei die Verstellvorrichtung (6) zumindest eine Teilleiste (33) umfasst, die in der Teigtrommel (3) durch den Linearantrieb (61) verstellbar angeordnet ist,
- wobei die Teilleiste (33) derart ausgebildet ist, dass die Verwiegestempel (32) an die Teilleiste (33), insbesondere berührend, anlegbar oder durch diese kraftübertragend beaufschlagbar sind, sodass bei Verstellung der Teilleiste (33) die Verwiegestempel (32) in den Aufnahmekammern (31) definiert verstellt werden,
und dass der Linearantrieb (61) einen elektromechanischen Antrieb (62) und zumindest einen Aktor (63) umfasst, mit dem eine Anzahl der Verwiegestempel (32) über die Teilleiste (33) verstellbar ist, wobei mittels des Aktors (63) die rotatorische Bewegung des elektromechanischen Antriebs (62) in eine Linearbewegung umwandelbar ist.

6. Teigtrommel nach Anspruch 5, **dadurch gekennzeichnet, dass** der Linearantrieb (61) einen elektromechanischen Antrieb (62) mit Positionserkennung umfasst.

7. Teigtrommel nach Anspruch 6, **dadurch gekennzeichnet, dass** der Aktor (63) als Spindeltrieb, Hub-Kurbel, Kniehebel, Hydraulikzylinder oder Pneumatikzylinder ausgebildet ist.

8. Teigtrommel nach einem der Ansprüche 5 bis 7, **dadurch gekennzeichnet, dass** die Teigtrommel (3) zumindest eine Wechselleiste (7) umfasst, die in das Gehäuse (8) lösbar einschiebbar oder aufsteckbar ist,
- wobei die Aufnahmekammern (31) für die zu portionierenden Teigportionen in der Wechselleiste angeordnet sind.

9. Teigtrommel nach einem der Ansprüche 5 bis 8, **dadurch gekennzeichnet, dass** die Verstellvorrichtung (6) je einen Linearantrieb (61) je Verwiegstempel (32) umfasst, wobei jeder Verwiegestempel (32), insbesondere alle Verwiegestempel (32) gleichzeitig und/oder gleichmäßig, durch die jeweiligen Linearantrieb (61) gesteuert in den jeweiligen Aufnahmekammern (31) verstellbar sind, wobei der Hub und/oder die Verstellgeschwindigkeit und/oder der Verstellzeitpunkt der Verwiegestempel (32) durch den jeweiligen Linerantrieb (61) gesteuert verstellbar ist.

10. Vorrichtung zur Durchführung des Verfahren nach einem der Ansprüche 1 bis 4 umfassend eine Auswiegevorrichtung (20) mit einem Auswiegeschieber (2) der in einem Ausgabekanal (22) gesteuert hin- und herbewegbar ist und eine verschwenkbare oder um ihre Achse verdrehbare Teigtrommel (3) nach einem der Ansprüche 5 bis 9.

## Claims

1. Method for weighing and transporting dough, with a device (10) comprising:
- a weighing device (20) with a weighing sliding member (2) which can be moved back and forth in a controlled manner in a discharge channel (22),
- a dough drum (3) which can be pivoted or rotated about the axis thereof and which has at least one receiving chamber (31) for receiving dough and has for each receiving chamber (31) a weighing stamp (32) which is guided in a linear manner in the receiving chamber (21) in a radial direction of the dough drum (3) and which is adjusted in the receiving chamber (31) by an adjustment device (6), and
- a forming drum (4) with a number of forming chambers (41) which are distributed in a uniform manner over the circumference of the forming drum (4),
- wherein in a weighing step a) a defined volume of dough is weighed and/or pressed via the discharge channel (21) by means of the weighing sliding member (2) into at least one receiving chamber (31), wherein the weighed volume of dough is predetermined and adjusted by means of radial adjustment of the weighing stamp (32),
- wherein in a transport step b) after reaching the predetermined filling volume and/or filling pressure in the receiving chamber (31) the weighing sliding member (2) is stopped and the dough drum (3) is pivoted into a transfer region (5) until the respective receiving chamber (31) which is filled with dough is positioned with respect to one of the forming chambers (41) so that the dough can be transferred from the receiving chamber (31) into the respective forming chamber (41) and
- wherein the weighing stamp (32) in an ejection step c) is adjusted in the receiving chamber (31) in such a manner that the dough is ejected from the receiving chamber (41) and discharged to the forming chamber (41),
wherein the adjustment device (6) comprises at least one linear drive (61) which adjusts the at least one weighing stamp (32), in particular all the weighing stamps (32) at the same time and uniformly, in a controlled manner, wherein the stroke and/or the adjustment speed and/or the adjustment time of the weighing stamp (32) is controlled by the adjustment device (6) and, depending on the nature of the dough or in accordance with provisions, is changed where applicable in accordance with a stored template,
wherein the adjustment device (6) comprises at least one part-bar (33) which is arranged in the dough drum (3) so as to be able to be adjusted by the linear drive (61),
- wherein the part-bar (33) is constructed in such a manner that the weighing stamps (32) can be placed on the part-bar (33), in particular in a touching manner, or can be acted upon thereby in a force-transmitting manner so that when the part-bar (33) is adjusted, the weighing stamps (32) are adjusted in a defined manner in the receiving chambers (31),
and in that the linear drive (61) comprises an electromechanical drive (62) and at least one actuator (63) through which a number of weighing stamps (32) can be adjusted via the part-bar (33), wherein by means of the actuator (63) the rotational movement of the electromechanical drive (62) can be converted into a linear movement.

2. Method according to claim 1, **characterized in that** in the transport step b) during the pivoting of the dough drum (3) into the transfer region (5) the weighing stamp (32) is retracted in a controlled manner and the volume in the receiving chamber (31) is increased in order to reduce the dough load and/or the dough pressure.

3. Method according to either of the preceding claims, **characterized in that** in the weighing step a) depending on the dough consistency and/or the dough strength the weighing stamps (32) are retracted into the receiving chambers (31) before the dough is weighed or **in that** the dough is pressed by means of the weighing sliding member (2) against the weighing stamps (32) and the weighing stamps (32) are then adjusted at the same time with the weighing sliding member (2).

4. Method according to any one of the preceding claims, **characterized in that** the ejection step c) already begins during the transport step b), wherein the time of the beginning and/or the duration of the ejection step c) is adjusted depending on the dimension of the weighing stamp (32),
- wherein with weighing stamps (32) having large diameters the ejection step c) is begun later, in particular in accordance with a larger pivot angle of the dough drum (3), and is carried out at a high adjustment speed of the weighing stamps (32) and/or,
- wherein with weighing stamps (32) having small diameters the ejection step c) is begun earlier, in particular with a smaller pivot angle of the dough drum (3), and is carried out at a low adjustment speed of the weighing stamps (32).

5. Dough drum (3), in particular a dough-dividing drum, for portioning dough, in particular for performing the method according to any one of claims 1 to 4, which can be gradually rotated or pivoted by a drive, comprising a housing (8),
- wherein the dough drum (3) has a number of receiving chambers (31) for the dough portions which are intended to be portioned and which are in particular distributed in a uniform manner over the circumference,
- wherein in at least one of the receiving chambers (31), in particular in each of the receiving chambers (31), a weighing stamp (32) is guided in a linear manner and arranged so as to be able to be displaced by an adjustment device (6) in the receiving chamber (31) in a radial direction of the dough drum (3), and
wherein the weighing stamps (32) are arranged in the dough drum (3) in such a manner that, when the weighing stamps (32) are displaced, dough can be introduced into the receiving chamber (41), wherein the adjustment device (6) comprises at least one linear drive (61) through which a predetermined number of weighing stamps (32), in particular all the weighing stamps (32), can be adjusted in a controlled manner at the same time and/or in a uniform manner in the respective receiving chambers (31), wherein the stroke and/or the adjustment speed and/or the adjustment time of the weighing stamps (32) can be adjusted in a controlled manner by the linear drive (61),
wherein the adjustment device (6) comprises at least one part-bar (33) which is arranged in the dough drum (3) so as to be able to be adjusted by the linear drive (61),
- wherein the part-bar (33) is constructed in such a manner that the weighing stamps (32) can be placed on the part-bar (33), in particular in a touching manner, or can be acted upon thereby in a force-transmitting manner so that when the part-bar (33) is adjusted, the weighing stamps (32) are adjusted in a defined manner in the receiving chambers (31),
and in that the linear drive (61) comprises an electromechanical drive (62) and at least one actuator (63) through which a number of weighing stamps (32) can be adjusted via the part-bar (33), wherein by means of the actuator (63) the rotational movement of the electromechanical drive (62) can be converted into a linear movement.

6. Dough drum according to claim 5, **characterized in that** the linear drive (61) comprises an electromechanical drive (62) with position recognition.

7. Dough drum according to claim 6, **characterized in that** the actuator (63) is in the form of a spindle drive, lifting crank, toggle lever, hydraulic cylinder or pneumatic cylinder.

8. Dough drum according to any one of claims 5 to 7, **characterized in that** the dough drum (3) comprises at least one exchange bar (7) which can be releasably inserted or fitted in the housing (8).
- wherein the receiving chambers (31) for the dough portions which are intended to be portioned are arranged in the exchange bar.

9. Dough drum according to any one of claims 5 to 8, **characterized in that** the adjustment device (6) comprises one linear drive (61) per weighing stamp (32). wherein each weighing stamp (32), in particular all the weighing stamps (32) can be adjusted in a controlled manner in the respective receiving chambers (31) at the same time and/or in a uniform manner by the respective linear drive (61), wherein the stroke and/or the adjustment speed and/or the adjustment time of the weighing stamps (32) can be adjusted in a controlled manner by the respective linear drive (61).

10. Device for carrying out the method according to any one of claims 1 to 4, comprising a weighing device (20) with a weighing sliding member (2) which can be moved back and forth in a controlled manner in a discharge channel (22) and a dough drum (3) which can be pivoted or rotated about the axis thereof according to any one of claims 5 to 9.

## Revendications

1. Procédé pour peser et transporter de la pâte, avec un dispositif (10) comprenant :
- un dispositif de pesage (20) avec un coulisseau de pesage (2) qui peut être déplacé alternativement de manière commandée dans un canal de sortie (22),
- un tambour à pâte (3) pivotant ou rotatif autour de son axe qui présente au moins une chambre de réception (31) pour la réception de pâte et par chambre de réception (31) un poinçon de pesage (32) guidé de manière linéaire dans la chambre de réception (21) dans le sens radial du tambour à pâte (3), poinçon qui est déplacé par un dispositif de déplacement (6) dans la chambre de réception (31) et
- un tambour actif (4) avec un nombre de chambres actives (41) réparties uniformément sur la périphérie du tambour actif (4),
- dans lequel dans une étape de pesage a), un volume de pâte défini est pesé et/ou enfoncé par le biais du canal de sortie (21) au moyen du coulisseau de pesage (2) dans au moins une chambre de réception (31), dans lequel le volume de pâte pesé est prédéfini et réglé au moyen du déplacement radial du poinçon de pesage (32),
- dans lequel dans une étape de transport b) après l'atteinte du volume de remplissage et/ou de la pression de remplissage prédéfinie dans la chambre de réception (31), le coulisseau de pesage (2) est arrêté et le tambour à pâte (3) est pivoté dans une zone de transfert (5) jusqu'à ce que la chambre de réception (31) respective remplie de pâte soit positionnée en face d'une des chambres actives (41) de sorte que la pâte puisse être transférée de la chambre de réception (31) dans la chambre active (41) respective et
- dans lequel le poinçon de pesage (32) est déplacé dans une étape d'éjection c) dans la chambre de réception (31) de telle manière que la pâte soit éjectée de la chambre de réception (41) et délivrée à la chambre active (41),
dans lequel le dispositif de déplacement (6) comprend au moins un entraînement linéaire (61) qui déplace de manière commandée au moins un poinçon de pesage (32), en particulier tous les poinçons de pesage (32) simultanément et uniformément, dans lequel la course et/ou la vitesse de déplacement et/ou le moment de déplacement des poinçons de pesage (32) est commandé par le dispositif de déplacement (6) et modifié selon la nature de la pâte ou selon la prescription, éventuellement selon un modèle enregistré,
dans lequel le dispositif de déplacement (6) comprend au moins une baguette partielle (33) qui est agencée de manière déplaçable dans le tambour à pâte (3) par l'entraînement linéaire (61),
- dans lequel la baguette partielle (33) est formée de telle manière que les poinçons de pesage (32) puisse être posés contre la baguette partielle (33), en particulier par contact ou puissent être sollicités par celle-ci de manière à transmettre la force de sorte que lors du déplacement de la baguette partielle (33), les poinçons de pesage (32) soient déplacés de manière définie dans les chambres de réception (31),
et en ce que l'entraînement linéaire (61) comprend un entraînement (62) électromécanique et au moins un actionneur (63), avec lequel un nombre de poinçons de pesage (32) est déplaçable par le biais de la baguette partielle (33), dans lequel le mouvement rotatif de l'entraînement (62) électromécanique peut être converti en un mouvement linéaire au moyen de l'actionneur (63).

2. Procédé selon la revendication 1, **caractérisé en ce que** dans l'étape de transport b) pendant le pivotement du tambour à pâte (3) dans la zone de transfert (5), le poinçon de pesage (32) est intégré de manière commandée et le volume dans la chambre de réception (31) est agrandi afin de réduire la charge de la pâte et/ou la pression de la pâte.

3. Procédé selon l'une quelconque des revendications précédentes, **caractérisé en ce que** dans l'étape de pesage a) en fonction de la consistance de la pâte et/ou de la résistance de la pâte, les poinçons de pesage (32) sont rentrés avant le pesage de la pâte dans les chambres de réception (31) ou **en ce que** la pâte est pressée au moyen du coulisseau de pesage (2) contre les poinçons de pesage (32) et les poinçons de pesage (32) sont ensuite déplacés simultanément avec le coulisseau de pesage (2).

4. Procédé selon l'une quelconque des revendications précédentes, **caractérisé en ce que** l'étape d'éjection c) commence dès l'étape de transport b), dans lequel le moment du début et/ou la durée de l'étape d'éjection c) est réglée en fonction de la dimension des poinçons de pesage (32),
- dans lequel pour des poinçons de pesage (32) avec de grands diamètres, l'étape d'éjection c) est commencée plus tard, en particulier selon un angle de pivotement plus grand du tambour à pâte (3) et est effectuée avec une vitesse de déplacement élevée des poinçons de pesage (32) et/ou
- dans lequel pour des poinçons de pesage (32) avec de petits diamètres, l'étape d'éjection c) est commencée plus tôt, en particulier pour un angle de pivotement plus petit du tambour à pâte (3) et est effectuée avec une vitesse de déplacement plus basse des poinçons de pesage (32).

5. Tambour à pâte (3), en particulier tambour de séparation de pâte pour le portionnement de pâte, en particulier pour la mise en œuvre du procédé selon l'une quelconque des revendications 1 à 4 qui est progressivement rotatif ou pivotant par un entraînement, comprenant un boîtier (8),
- dans lequel le tambour à pâte (3) comprend un nombre de chambres de réception (31) pour les portions de pâte à portionner qui sont réparties en particulier uniformément sur la périphérie,
- dans lequel dans au moins une des chambres de réception (31), en particulier dans chacune des chambres de réception (31), un poinçon de pesage (32) est guidé de manière linéaire et agencé de manière mobile par un dispositif de déplacement (6) dans la chambre de réception (31) dans le sens radial du tambour à pâte (3) et
- dans lequel les poinçons de pesage (32) sont agencés dans le tambour à pâte (3) de telle manière que lors du coulissement des poinçons de pesage (32), de la pâte puisse être introduite dans la chambre de réception (41), dans lequel le dispositif de déplacement (6) comprend au moins un entraînement linéaire (61), avec lequel un nombre prédéfini de poinçons de pesage (32), en particulier tous les poinçons de pesage (32) sont déplaçables simultanément et/ou uniformément de manière commandée dans les chambres de réception (31) respectives, dans lequel la course et/ou la vitesse de déplacement et/ou le moment de déplacement des poinçons de pesage (32) est déplaçable de manière commandée par l'entraînement linéaire (61),
dans lequel le dispositif de déplacement (6) comprend au moins une baguette partielle (33) qui est agencée de manière déplaçable dans le tambour à pâte (3) par l'entraînement linéaire (61),
- dans lequel la baguette partielle (33) est formée de telle manière que les poinçons de pesage (32) puisse être posés contre la baguette partielle (33), en particulier par contact ou puissent être sollicités par celle-ci de manière à transmettre la force de sorte que lors du déplacement de la baguette partielle (33), les poinçons de pesage (32) soient déplacés de manière définie dans les chambres de réception (31),
et en ce que l'entraînement linéaire (61) comprend un entraînement (62) électromécanique et au moins un actionneur (63), avec lequel un nombre de poinçons de pesage (32) est déplaçable par le biais de la baguette partielle (33), dans lequel le mouvement rotatif de l'entraînement (62) électromécanique peut être converti en un mouvement linéaire au moyen de l'actionneur (63).

6. Tambour à pâte selon la revendication 5, **caractérisé en ce que** l'entraînement linéaire (61) comprend un entraînement (62) électromécanique avec détection de position.

7. Tambour à pâte selon la revendication 6, **caractérisé en ce que** l'actionneur (63) est formé comme mécanisme à broche, manivelle de levage, levier à genouillère, vérin hydraulique ou vérin pneumatique.

8. Tambour à pâte selon l'une quelconque des revendications 5 à 7, **caractérisé en ce que** le tambour à pâte (3) comprend au moins une baguette interchangeable (7) qui peut être enfoncée ou enfichée de manière amovible dans le boîtier (8),
- dans lequel les chambres de réception (31) pour les portions de pâte à portionner sont agencées dans la baguette interchangeable.

9. Tambour à pâte selon l'une quelconque des revendications 5 à 8, **caractérisé en ce que** le dispositif de déplacement (6) comprend un entraînement linéaire (61) par poinçon de pesage (32), dans lequel chaque poinçon de pesage (32), en particulier tous les poinçons de pesage (32) sont déplaçables simultanément et/ou uniformément de manière commandée dans les chambres de réception (31) respectives par l'entraînement linéaire (61) respectif, dans lequel la course et/ou la vitesse de déplacement et/ou le moment de déplacement des poinçons de pesage (32) est déplaçable de manière commandée par l'entraînement linéaire (61) respectif.

10. Dispositif de réalisation du procédé selon l'une quelconque des revendications 1 à 4 comprenant un dispositif de pesage (20) avec un coulisseau de pesage (2) qui est mobile alternativement de manière commandée dans un canal de sortie (22) et un tambour à pâte (3) pivotant ou rotatif autour de son axe selon l'une quelconque des revendications 5 à 9.
